(19)

Europäisches
Patentamt
European
Patent Office
Office européen
des brevets

(11) **EP 2 463 616 A1**

(12) **EUROPEAN PATENT APPLICATION**
published in accordance with Art. 153(4) EPC

(43) Date of publication:
**13.06.2012 Bulletin 2012/24**

(21) Application number: **09848074.2**

(22) Date of filing: **11.09.2009**

(51) Int Cl.:
*G01B 9/02* (2006.01)          *G01B 11/24* (2006.01)
*G01N 21/956* (2006.01)

(86) International application number:
**PCT/JP2009/066318**

(87) International publication number:
**WO 2011/016146 (10.02.2011 Gazette 2011/06)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.08.2009 JP 2009184584**

(71) Applicant: **Kabushiki Kaisha TOPCON
Tokyo 174-8580 (JP)**

(72) Inventors:
• **OOTOMO, Fumio**
  **Tokyo 174-8580 (JP)**
• **NUNOKAWA, Kazuo**
  **Tokyo 174-8580 (JP)**
• **MOMIUCHI, Masayuki**
  **Tokyo 174-8580 (JP)**
• **ISOZAKI, Hisashi**
  **Tokyo 174-8580 (JP)**
• **MIYAKAWA, Kazuhiro**
  **Tokyo 174-8580 (JP)**

(74) Representative: **Witte, Weller & Partner
Königstrasse 5
70173 Stuttgart (DE)**

(54) **INTERFERENCE MICROSCOPE AND MEASURING APPARATUS**

(57)    In an interference microscope and a measuring device for observing and inspecting the surface and inside of a specimen such as a wafer by applying laser light to the specimen and using an interferometer, a reference optical path for conducting light is provided between a beam splitter and a reference mirror, and a measurement optical path for conducting light is provided between the beam splitter and the specimen, thereby providing an optical path difference between the reference optical path and the measurement optical path. Further, the reference mirror is tilted slightly, thereby forming interference fringes on detection means. It is possible to measure the surface shape of the specimen (measurement object) such as a wafer only by slightly tilting the reference mirror with a simple configuration and locate the accurate coordinate positions of foreign particles and pole pieces.

FIG.1

EP 2 463 616 A1

**Description**

BACKGROUND OF THE INVENTION

1. Field of the Invention

The present invention relates to an interference microscope and a measuring device for observing and detecting irregularities in the surface or inside of a specimen (measurement object) such as a wafer, using an interferometer typified by, e.g., a Michelson or Linnik interferometer.

2. Description of the Related Art

Conventionally, there has been known a measuring device, using an interferometer, for observing and inspecting the surface and inside of a specimen (measurement object) by splitting incident light into two optical paths, applying one light to the specimen and the other light to a reference mirror, and forming interference fringes by interference between reflected light from the specimen and reference light.

In Japanese Patent Unexamined Publication No. 2006-116028, a usable measurement range is extended by using phase shift means for shifting the phase of reference light by moving a reference mirror in the direction of an optical axis by a piezo element PZT in forming interference fringes. The same is drawn from Institute of Applied Physics, University of Tsukuba; Special Research Project on Nanoscience, University of Tsukuba; Shuichi Makita, Yoshiaki Yasuno, Takashi Endo, Masahide Itoh, and Toyohiko Yatagai "phase shift spectral interference optical coherence tomography by reference wavefront tilting" proceedings of the 64th academic lecture of the Japan Society of Applied Physics, autumn 2003, Fukuoka University.

In Japanese Patent Unexamined Publication No. 2005-530147, by comparing part of an inspection surface in a focused state, through a δz displacement, a reference mirror is displaced by δz, so that an optical measurement surface makes reliable contact with the proper portion of the inspection surface.

Further, in Japanese Patent Unexamined Publication No. 2006-300792, a moving mirror is arranged so as to freely move in the incident direction of light, and constant-velocity control is performed by a known piezo drive unit in generating interference light.

Further, in Japanese Patent Unexamined Publication No. 11-83457, a reference mirror can be fixedly disposed substantially perpendicular (including slight tilt to the extent of forming several interference fringes) to the light irradiation direction, and is provided tiltably in the light irradiation direction.

Further, in One-shot-phase-shifting Fourier domain optical coherence tomography by reference wavefront tilting, Yoshiaki Yasuno, Shuichi Makita, Takashi Endo, Gouki Aoki, Hiroshi Sumimura, Masahide Itoh, and Toyohiko Yatagai, 2004, Optical Society of America, phase shift without scanning is performed by a two-dimensional image pickup device, different incident angles are provided to object light and reference light incident on a CCD by tilting a reference mirror, and interference fringes of linearly different phases are developed with respect to the spatial axis of the CCD, captured by one shot, and measured. This technique enables measurement made by performing phase shift while suppressing an increase in time required for detection.

However, in the measuring device using the conventional interferometer, the optical path of the measurement object coincides with the reference optical path where the reference mirror is disposed; accordingly, the component count increases and a simple configuration cannot be achieved.

In Japanese Patent Unexamined Publication No. 2006-300792, it is necessary to correct an optical path length from the reference optical path by disposing a transmission limiting device, which makes the configuration complicated.

Further, in Japanese Patent Unexamined Publication No. 11-83457, it is necessary to provide a voltage control variable wavelength filter to change an optical path length, which makes the configuration complicated and cannot make the entire device compact, as in Japanese Patent Unexamined Publication No. 2006-300792.

SUMMARY OF THE INVENTION

It is an object of the present invention to provide an interference microscope and a measuring device that can measure the surface shape of a specimen (measurement object) such as a wafer only by slightly tilting a reference mirror with a simple configuration.

Preferred embodiments of the invention are described below.

(1) An interference microscope for observing and detecting fine irregularities in a specimen surface and internal height information, using a two-beam interferometer for irradiating a specimen and a reference mirror with two beams into which a light beam having a limited coherence length is split, the interference microscope including first means for shaping light beams from two light sources of different wavelengths and coherence lengths into a linear light beam on a same axis and emitting the linear light beam, second means for splitting a combined two-light-source beam, a reference optical path for conducting and applying the two-light-source beam to the reference mirror via the second means and forming an image only in a line direction, condensing means for forming and applying a two-light-source beam image to the specimen, a measurement optical path for condensing finely-reflected-and-scattered light from the specimen into a light beam and conducting the light beam, and a detection optical path for receiving, by same detection means, reflected light from the reference optical path and measurement light from the measurement optical path, in which by providing an optical path difference obtained by slight tilt to the reference optical path, interference fringe distribution having height distribution information in a line direction of the specimen surface is formed at a position where light beams from the reference mirror and the specimen overlap each other, and the height distribution information is obtained without moving a relative distance between the specimen and the reference mirror or moving interference fringes by wavelength scanning.

(2) The interference microscope in which the linear light beam is emitted by an element that emits light in line form.

(3) The interference microscope in which the linear light beam is emitted by an element that emits light in plane form.

(4) The interference microscope in which the linear light beam is obtained by linearly arranging point light sources.

(5) The interference microscope in which the linear light beam is a light beam shaped elliptically or linearly from point light sources via an asymmetric optical system.

(6) The interference microscope in which the linear light beam is a linear pattern formed by consecutively arranging point light sources or line light sources, using a diffraction optical element or a multireflection plate.

(7) The interference microscope in which the reference optical path and the measurement optical path are composed of different optical systems and have means for correcting a field angle deviation with respect to the measurement optical path and an optical path length difference by wavelength dispersion.

(8) The interference microscope in which at least one or both of the reference optical path and the measurement optical path is an optical waveguide device such as a fiber.

(9) The interference microscope in which the wavelengths of the two light sources lie in bands usable by a same optical system and detection means.

(10) The interference microscope in which a laser diode (LD), a light-emitting diode (LED), or a super luminescent diode (SLD) are provided as the light sources.

(11) The interference microscope in which a laser diode (LD) is used so as to emit light like a light-emitting diode (LED) or a super luminescent diode (SLD).

(12) The interference microscope in which at least one of the two light sources is a laser light source which oscillates at a single wavelength.

(13) The interference microscope in which at least one of the two light sources is a light source that has a switching function in a drive unit and can be used as a laser light source which oscillates at a single wavelength and a low-coherence source of a wide wavelength width.

(14) The interference microscope in which the two light sources emit light simultaneously.

(15) The interference microscope in which the two light sources have a switching function, and can be alternately turned on and off.

(16) The interference microscope in which the reference mirror is tilted in a fixed manner.

(17) The interference microscope in which the reference mirror is tilted in a tiltable manner.

(18) The interference microscope in which a stepwise mirror having a given step is used as the reference mirror.

(19) The interference microscope in which a Michelson interferometer or a Linnik interferometer is used as the interferometer.

(20) The interference microscope in which the interference microscope has measurement optical path beam scanning means or specimen stage moving means and enables sequential line irradiation in a one-dimensional direction of the specimen.

(21) The interference microscope in which a line sensor or an area sensor is used as the detection means (detector), and in order that light beams from the reference mirror and the specimen efficiently overlap each other in the sensor, light is condensed by a cylindrical lens and a distance between the detection means and splitting means is minimized as much as possible.

(22) The interference microscope in which in order to insert an optical element having a minimum function in the reference optical path, a cylinder lens having the same focal distance as an objective lens is used, and a flat glass substrate having the same effect as the dispersion value of the objective lens is inserted.

(23) The interference microscope in which the interference microscope has observation means in which illumination and imaging optical systems for displaying a two-dimensional image of the specimen are included and condensing means in the measurement optical path is shared as part of the optical systems, and enables height detection and specimen image observation to be performed simultaneously or separately by switching between respective light sources.

(24) The interference microscope in which an illumination light source of the observation means is a light source having a wavelength range different from that of a light source for height measurement.

(25) A measuring device provided with an interference microscope for observing and detecting fine irregularities in a specimen surface and internal height information, using a two-beam interferometer for irradiating a specimen and a reference mirror with two beams into which a light beam having a limited coherence length and shaped from point light sources is split, the measuring device including a reference optical path for conducting and applying a light beam to the reference mirror, condensing means for condensing a light beam into a point beam and applying the point beam to the specimen, and a measurement optical path for condensing finely-reflected-and-scattered light from the specimen into a light beam and conducting the light beam, in which by providing an optical path difference obtained by slight tilt to the reference optical path, interference fringes having height information is formed at a position where light beams from the reference mirror and the specimen overlap each other, and the height information can be obtained without vertically moving the specimen or moving the interference fringes.

According to the invention, it is possible to measure the surface shape of a measurement object (specimen) such as a wafer only by slightly tilting a reference mirror with a simple configuration. Further, the accurate coordinate positions of foreign particles and pole pieces are located, and the accurate data is sent and received to and from a charged particle beam device such as an electron microscope and a lithography system, which can further contribute to an improvement in the efficiency of work.

BRIEF DESCRIPTION OF THE DRAWINGS

Embodiments of the present invention will be described in detail based on the following figures, wherein:

FIG. 1 is an explanatory drawing showing an outline of an interference microscope according to a first preferred embodiment of the present invention;
FIG. 2A is a drawing of assistance in explaining detection of an envelope waveform of a first CCD, FIG. 2B is a drawing of assistance in explaining detection of a reference position indicate by an arrow, and FIG. 2C is a drawing of assistance in explaining phase measurement of a waveform of a second CCD in precise measurement;
FIG. 3 is an explanatory drawing showing an outline of an interference microscope according to a second preferred embodiment of the present invention;
FIG. 4 is an explanatory drawing showing an outline of a measuring device including the interference microscope according to the present invention;
FIG. 5 is a detailed explanatory drawing showing the measuring device in FIG. 4;
FIG. 6 is an explanatory drawing showing an outline of a measuring device including an interference microscope according to a fourth embodiment of the present invention;
FIG. 7 is an explanatory drawing showing the operation of a reflecting mirror in the embodiment of FIG. 6; and
FIG. 8A is an explanatory drawing showing an outline of a measuring device according to another preferred embodiment of the present invention, FIG. 8B shows arranged waveforms of three detectors of CCDa, and FIG. 8C shows arranged waveforms of CCDa and CCDb.

DETAILED DESCRIPTION OF THE INVENTION

An interference microscope and a measuring device according to the present invention use various types of interferometers.
In the best mode of the invention, a Michelson interferometer is used. However, a Linnik (phase shift) interferometer may be used as long as it brings about the effect of the invention.
For reference, an interferometer of Time domain Refractometry might be used to perform a slight tilt (tilt quantity $\Delta\lambda$) of a reference mirror (Ref) as indicated below.

$$\lambda = 800 \text{ nm}$$

$$\Delta\lambda = 30 \text{ nm}$$

$$\text{Resolution: } \Delta Z = 2\text{lm}/\pi \cdot \lambda^2/\Delta\lambda$$

$$= 9.4 \ \mu$$

$$\text{Horizontal resolution: } \Delta X = 4\lambda/\pi \cdot f/d$$

A scanning area in the direction of an optical axis is expressed as follows: $2Z_0 = \Delta X^2 \pi/2\lambda$

However, this has limited resolution; therefore, it is not easy to inspect the shape of an ultramicro area including foreign particles and pole pieces on a measurement object (specimen) such as a wafer.

Further, an interferometer of Fourier domain Refractometry might be used. However, this has limited spectroscopy and wavelength scanning; therefore, it is not easy to inspect the shape of an ultramicro area including foreign particles and pole pieces on a measurement object such as a wafer.

In the present invention, preferably, a reference mirror is tilted slightly in a fixed manner or in a tiltable manner (particularly in a swingable manner), thereby measuring the position of an interference end. For example, the reference mirror is fixed tilted slightly (15 minutes in the best mode), or is tilted in a tiltable manner (particularly in a swingable manner) as needed, thereby forming interference fringes on a line sensor. With this, an interference figure in the height direction can be obtained by one shot without laser scanning. Moreover, the position of the interference end can be measured using a low-coherence Michelson interferometer.

Further, in another best mode of the present invention, laser light, preferably laser light of two wavelengths, particularly two laser beams of a laser diode (LD), a light-emitting diode (LED), and a super luminescent diode (SLD) are applied to a specimen such as a wafer, and the surface and inside of the specimen are observed and inspected using an interferometer. In the case of using the laser diode (LD), in the relationship of intensity (power) to current, the intensity of laser light is proportional to (varies linearly with) the current where the current exceeds a predetermined threshold value (Ith), and the laser diode emits light like LED or SLD at currents up to the predetermined threshold value (Ith). Accordingly, by using the laser diode (LD) which is set to a minute current value so that the laser diode emits light vaguely at a certain amount of light, it is possible to observe and inspect the surface and inside of the specimen through an interferometer with one light source (e.g., laser diode (LD)).

Preferably, a reference optical path for conducting light to the reference mirror is provided between the reference mirror and a beam splitter (separating means). Further, an optical path difference is provided between a measurement optical path for conducting light to the measurement object (specimen) and the reference optical path.

Preferably, an optical system (lens) is provided in the measurement optical path for conducting measurement light while no optical system (lens) is provided in the reference optical path for conducting reference light, thereby making a variation in the optical path difference.

In the interference microscope and the measuring device using the interferometer according to the present invention, since the reference mirror for conducting the reference light is slightly tilted, an interference figure in the height direction of the specimen can be obtained by one shot without laser scanning.

In another embodiment of the present invention, an incident optical path, a measurement optical path, a reference optical path, and a detection optical path are arranged in the form of a cross, with a beam splitter (separating means) at the center thereof, and an optical path difference is provided between the reference optical path and the measurement optical path. Moreover, the reference mirror is tilted slightly (in a fixed manner or in a tiltable manner), thereby forming interference fringes on detection means. With this, an interference figure in the height direction of the specimen can be obtained by one shot without laser scanning.

Through the beam splitter provided as separating means, part of the light is conducted and reflected.

The detection means (detector) provided in the detection optical path receives reflected light from the measurement object and reflected light from the reference mirror via the beam splitter (separating means). Further, interference fringes are formed on the detection means.

To enable the use of laser light of two wavelengths, a laser diode (LD) or a light-emitting diode (LED) and a super luminescent diode (SLD) are provided in two branch optical paths of the incident optical path of laser light, respectively. In this case, light sources of two wavelengths of e.g. 780 nm and 880 nm in a near infrared band are used, thereby enabling detection by one detector sensitive in the infrared band. Further, if an element for turning on and off the laser diode (LD) and the like is used for switching, simultaneous irradiation, single irradiation at each individual wavelength, and detection can be performed. Furthermore, if a visible light source sensitive in visible light is used as an observation light source, simultaneous irradiation can be performed minimizing effects of light sources on each other's detection systems.

In another preferred embodiment of the present invention, a lens is disposed in the measurement optical path, and no lens is disposed in the reference optical path, thereby providing an optical path difference. Furthermore, the reference mirror is tilted slightly (in a fixed manner or in a tiltable manner), thereby making it possible to measure the surface shape of the measurement object such as a wafer.

However, in the case of using the light source shaped like a line rather than a point, a field angle arises at points other than the optical-axis center, that is, in the direction of the line, so that in the reference light without a lens, a phenomenon in which interference fringes tilt along the direction of the field angle, which becomes a factor that prevents high-precision measurement. Further, in the case of using light sources of a plurality of wavelengths, measurement optical path lengths differ between the wavelengths, so that interference fringes become misaligned between the wavelengths. Thus, the Michelson or Linnik interferometer which uses the same optical components in the optical system of the interference microscope to minimize these effects is used.

In the present invention, to eliminate these effects, preferably an optical element having a minimum function is inserted in the reference optical path. As the best mode, correction is made by using a cylinder lens having the same focal distance as an objective lens and inserting a flat glass substrate having the same effect as the dispersion value of the objective lens. For example, if the focal distance of the objective lens is 40 mm, the focal distance of the cylinder lens can be determined to be 40 mm. Further, by obtaining the respective objective-lens optical path lengths of wavelengths used, correction can be made by inserting a flat substrate obtained by (refractive index difference of glass material)x(thickness of glass material).

As a modification, it is also possible to dispose no lens in the measurement optical path for conducting light to the measurement object (specimen) and dispose a lens in the reference optical path for conducting light to the reference mirror to provide an optical path difference.

According to another embodiment of the present invention, the surface shape of the specimen (measurement object) such as a wafer and the accurate coordinate positions of foreign particles (foreign substances) and pole pieces on the surface are determined, the accurate data is sent and received to and from a charged particle beam device such as an electron microscope and a lithography system, and the surface shape, foreign particles, and pole pieces are rapidly inspected, which can further contribute to an improvement in the efficiency of work such as semiconductor inspection.

Embodiments

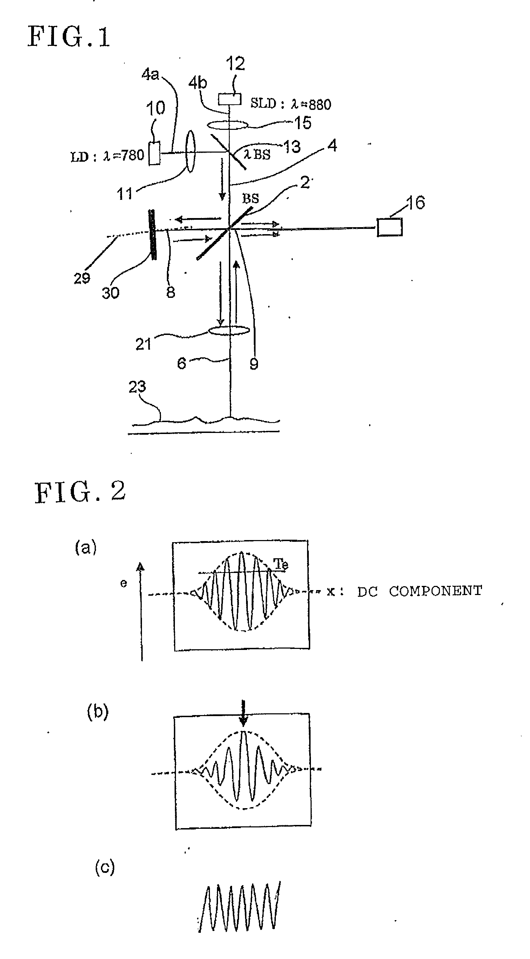

FIG. 1 shows an outline of an interference microscope constituting the main part of a measuring device according to a preferred embodiment of the present invention.

As shown in FIG. 1, any two light sources of a laser diode (LD) or a luminescent diode (LD) 10 and a super luminescent diode (SLD) 12 are provided on an incident side, as sources of laser light of two wavelengths, particularly as low-coherence sources. Preferably, light sources of two wavelengths of e.g. 780 nm and 880 nm in a near infrared band are used, thereby enabling detection by one detector sensitive in the infrared band. Alternatively, for example, a light-emitting diode (LED) having a wavelength $\lambda$ of 650 nm, a super luminescent diode (SLD) having a wavelength $\lambda$ of 800 nm, or a laser diode (LD) having wavelengths $\lambda$ of about 800-900 nm can be used. In the present invention, other low-coherence sources of laser light of two wavelengths can be used.

At least four optical paths, i.e., an incident optical path 4, a measurement optical path 6, a reference optical path 8, and a detection optical path 9 are arranged in the form of a cross, with a beam splitter 2 functioning as separating means at the center thereof.

The incident optical path 4 is branched at an incident beam splitter 13 into two branch optical paths 4a and 4b. A lens 11 and the luminescent diode 10 are disposed in the branch optical path 4a, and a lens 15 and the super luminescent diode 12 are disposed in the branch optical path 4b.

In the example shown in FIG. 1, a lens 21 is disposed in the measurement optical path 6. Laser light is applied to a specimen 23 via the measurement optical path 6.

Since no lens is disposed in the reference optical path 8, laser light is directly conducted to a reference mirror 30 via the reference optical path 8.

As indicated by an alternate long and short dash line 29 in FIG. 1, the reference mirror 30 is fixed, slightly tilted relative to the optical axis of the reference optical path 8. It is preferable that the tilt angle be, for example, about 15 minutes (i.e., 15/60 degrees).

Instead of the above-described fixed manner, the reference mirror 30 may be tilted in a tiltable manner within a desired tilt angle as a modification. In particular, the reference mirror 30 may be tilted in a swingable manner with a period of several seconds (e.g., 4 or 5 seconds) to a few tens of seconds (20-30 seconds).

In the example shown in FIG. 1, the lens 21 is provided in the measurement optical path 6 and no lens is provided in the reference optical path 8, thereby providing an optical path difference between the reference optical path 8 and the measurement optical path 6. However, as a modification, a lens (not shown) may be provided in the reference optical path 8, thereby providing an optical path difference between the reference optical path 8 and the measurement optical path 6.

Further, as another modification, the same lens as the lens 21 in the measurement optical path 6 for conducting measurement light can be detachably provided in the reference optical path 8 for conducting reference light. The lens may be removed from the reference optical path 8 for conducting the reference light so that the reference optical path 8 may have an optical path length different from that of the measurement optical path 6.

Thus, in any configuration, preferably an optical path difference is provided between the reference optical path 8 and the measurement optical path 6, and the reference mirror 30 is slightly tilted. The reference mirror 30 is slightly tilted, for example, by about 15 minutes (i.e., 15/60 degrees). By thus tilting the reference mirror 30, reflected light from the specimen 23 and the reference light from the reference mirror 30 interfere with each other without scanning the surface of the specimen 23, which forms interference fringes on detection means 16.

A preferred embodiment of the detection means 16 will be described. Light sources of two wavelengths of e.g. 780 nm and 880 nm in a near infrared band are used, thereby enabling detection by one detector sensitive in the infrared band. Further, if an element for turning on and off the laser diode (LD) and the like is used for switching, simultaneous irradiation, single irradiation at each individual wavelength, and detection can be performed. Furthermore, if a visible light source sensitive in visible light is used as an observation light source, simultaneous irradiation can be performed minimizing effects of light sources on each other's detection systems.

In particular, it is preferable to insert an optical element having a minimum function in the reference optical path 8. For example, correction is made by using a cylinder lens having the same focal distance as an objective lens and inserting a flat glass substrate having the same effect as the dispersion value of the objective lens.

Further, in another embodiment, the detection means 16 is composed of a first CCD for detecting a focused wave (waveform) and a second CCD for detecting a standing wave (waveform). The first CCD has a plurality of detectors which detect a plurality of focused waves (waveforms) having different frequencies in accordance with optical intensity.

To obtain the maximum value (peak) of a waveform (focused wave), the waveform (focused wave) acquired by the first CCD is multiplied by the standing wave of the second CCD, thereby emphasizing the maximum value (peak) of the waveform (focused wave) to facilitate detection.

In the focused wave (waveform), a signal is not necessarily detected from a convergent end. For example, a signal may be detected from a predetermined position on the horizontal axis (x axis, spatial axis) in FIG. 2.

In another embodiment of the present invention, as shown in FIG. 2A, an envelope waveform of the first CCD is detected in processing step 1, and x is obtained by the following relation equation.

$$Te < ex$$

where x denotes a DC (current) component, and T denotes a period.

The maximum position of the envelope waveform shown in FIG. 2A is detected as a reference position.

It is preferable to use an arrow shown in FIG. 2B to obtain the maximum position of the envelope waveform of the first CCD as the reference position.

FIG. 2C shows one periodic waveform. Thus, it is preferable to obtain the phase measurement of the waveform of the second CCD shown in FIG. 2B as precise measurement.

Further, it is possible to obtain a phase by precise Fourier transform. That is, by Fourier transform with bit-length minute fluctuation, a spatial frequency is detected and a phase is measured. In this case, the spatial frequency obtaining a precision N-period times a precision obtained with one period is determined by the measuring device. Accordingly, the spatial frequency is constant in the absence of changes in temperature and other conditions, so that intermittent detection is enough to detect the spatial frequency.

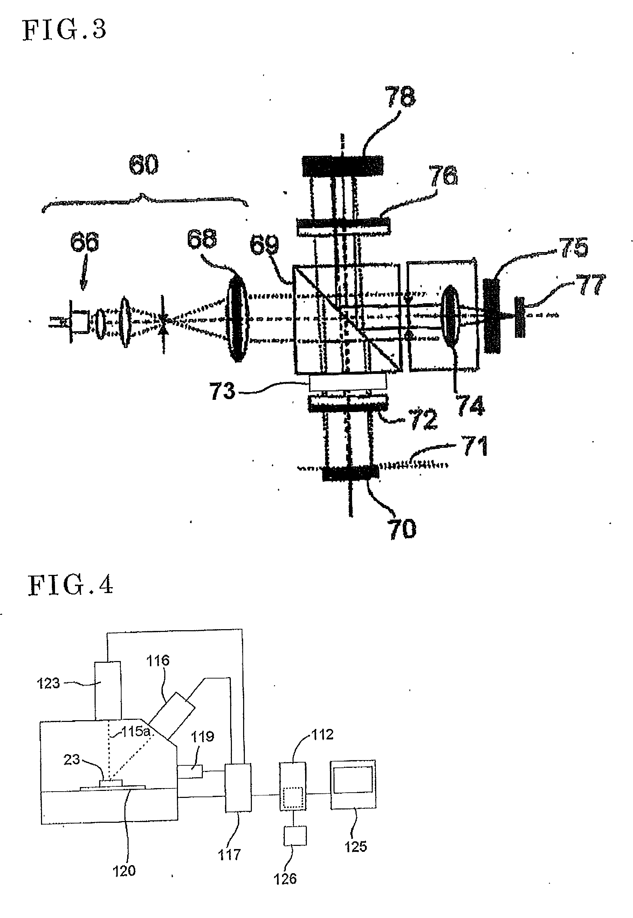

FIG. 3 shows an outline of an interference microscope according to a second preferred embodiment of the present invention.

In FIG. 3, the interference microscope has a pulsed laser 66, a collimate lens 68, a beam splitter 69, a long working distance objective lens 74, a glass plate 75, a test surface 77, a reference mirror 70, a cylinder lens 72, a glass plate 73, a cylinder lens 76, an area sensor 78, and the like. The reference mirror 70 is disposed, slightly tilted as indicated by a broken line 71.

In the second embodiment as well, a laser light source of a laser diode (LD), a luminescent diode (LD), or a super luminescent diode (SLD) is used. The luminescent diode (LD) and the super luminescent diode (SLD) are provided on an incident side, as sources of laser light of two wavelengths, particularly as low-coherence sources. Preferably, light sources of two wavelengths of e.g. 780 nm and 880 nm in a near infrared band are used, thereby enabling detection by one detector sensitive in the infrared band. Alternatively, for example, a light-emitting diode (LED) having a wavelength $\lambda$ of 650 nm or a super luminescent diode (SLD) having a wavelength $\lambda$ of 800 nm may be used. In the case of using the laser diode (LD), a pulsed laser having wavelengths of about 800-900 nm (center wavelength = 850-890 nm) may be used. In the case of the laser diode, in the relationship of intensity (power, P) to current (I), the intensity (power) of laser light is proportional to (varies linearly with) the current where the current exceeds a predetermined threshold value (Ith), and the laser diode emits light like LED or SLD at currents up to the predetermined threshold value (Ith). Accordingly, by using the laser diode (LD) which is set to a minute current value so that the laser diode emits light vaguely at a certain amount of light, it is possible to observe and inspect the surface and inside of the specimen through an interferometer with one light source (e.g., laser diode (LD)). In the case of using the light-emitting diode (LED) as the light source, a linear light beam having a line width of a few micrometers (e.g., 2-3 $\mu$m) and a length of approximately 250-300 $\mu$m may be made by providing an extremely narrow slit having a width of only a few nanometers or a few micrometers after light is condensed by the collimate lens or the like, and applied to a specimen.

Further, if an element for turning on and off the laser diode (LD) and the like is used for switching, simultaneous irradiation, single irradiation at each individual wavelength, and detection can be performed. Furthermore, if a visible light source sensitive in visible light is used as an observation light source, simultaneous irradiation can be performed minimizing effects of light sources on each other's detection systems.

In the present invention, the pulsed laser 66 as the laser diode (LD) emits light like LED as described above, and a linear light beam having a line width of a few micrometers (e.g., 2-3 $\mu$m) and a length of approximately 250-300 $\mu$m is made by disposing an extremely narrow slit 80 having a width of only a few nanometers or a few micrometers on the image side of the collimate lens immediately subsequent to the pulsed laser 66, and applied to the specimen. Further, as indicated by numeral 71, the reference mirror 70 is tilted slightly in a fixed manner or in a tiltable manner (particularly in a swingable manner), thereby measuring the position of an interference end. For example, the reference mirror 70 is fixed tilted slightly (15 minutes (i.e., 15/60 degrees) in the best mode), or is tilted in a tiltable manner (particularly in a swingable manner) as needed, thereby forming interference fringes on the area sensor 78. With this, an interference figure in the height direction can be obtained by one shot without laser scanning. Moreover, the position of the interference end can be measured using a low-coherence Michelson interferometer.

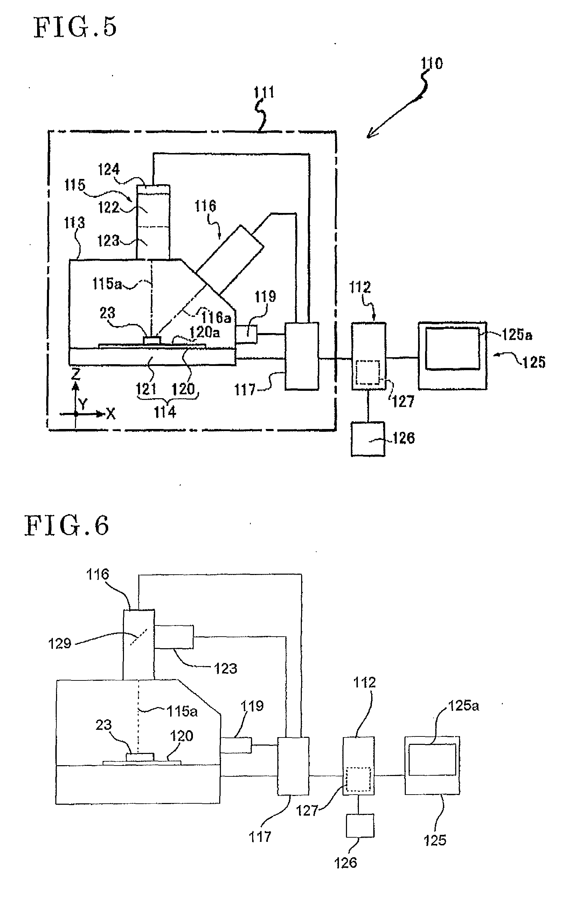

Referring to FIGS. 4 and 5, an example of the measuring device including the interference microscope according to the present invention will be described.

In a complex type observation device 110 as the measuring device, a device main body 111 is connected to a control unit 112. The device main body 111 includes a specimen chamber 113, a mounting stage mechanism 114, an observation optical system 115, a scanning electron microscope 116, and a drive unit 117. Hereinafter, the scanning electron microscope 116 is occasionally abbreviated as a SEM 116.

The specimen chamber 113 is a casing for forming an airtight space. Although not shown, the specimen chamber 113 is provided with a door (not shown) through which the specimen 23 (observation object) is transferred. The specimen chamber 113 has an airtight structure, and is provided with a vacuum device 119. The vacuum device 119 is driven by a drive signal from the drive unit 117 and vacuates the specimen chamber 113. The mounting stage mechanism 114 is disposed inside the specimen chamber 113.

The mounting stage mechanism 114 has a mounting stage 120 and a stage moving unit 121. The mounting stage 120 has a mounting surface 120a for mounting an observation object 118. Although not shown, the mounting stage 120 can fixedly hold the observation object 118 mounted on the mounting surface 120a, thus preventing the specimen 23 from being displaced on the mounting surface 120a by movement of the stage moving unit 121. The stage moving unit 121 supports the mounting stage 120 movably along the XY plane and movably in the Z direction while maintaining the mounting surface 120a in parallel with the XY plane. Also, the stage moving unit 121 moves the mounting stage 120 along the XY plane and in the Z direction in accordance with a drive signal from the drive unit 117. Although not shown, the mounting stage mechanism 114 is provided with a reference position for moving the mounting stage 120 (mounting surface 120a) by the stage moving unit 121.

The observation optical system 115 is provided to have an observation optical axis 115a of the measurement optical path 6 which passes through the center of the mounting stage 120 (mounting surface 120a) as the reference position and extends along the Z direction. The observation optical system 115 is airtightly attached to the specimen chamber 113. For example, the scanning electron microscope (SEM) 116 and a measurement optical system, that is, an interference microscope 123 are combined, and share a single objective lens and the common observation optical axis 115a. In the observation optical system 115, the interference microscope 123 has a higher resolution than an optical microscope 122, and can measure a dimension in the height direction (Z direction). Further, the interference microscope 123 has a lower resolution than the SEM 116, and therefore has an intermediate resolution between the resolutions of the optical microscope 122 and the SEM 116. For example, the interference microscope 123 has a magnification of about 1,000 times, and the SEM 116 has a magnification of about 10,000-30,000 times. The interference microscope 123 can be formed with, for example, a confocal microscope, a laser microscope, or an interferometer. With the interference microscope 123 and the SEM 116, it is possible to observe the specimen 23 (acquire image data) with their respective resolutions in displayable areas on a display unit 125 (display screen 125a) described later. That is, the measurement optical system 123 and the SEM 116 are set so as to observe the areas of sizes according to the respective resolutions (acquire image data in the areas).

The observation optical system 115 includes a light receiving unit 124 for receiving image data (reflected light) from the specimen 23 acquired by the interference microscope 123. Image data received by the light receiving unit 124 is converted into an electric signal, which is sent to the control unit 112 via the drive unit 117. In the observation optical system 115, magnification change of the SEM 116 and the interference microscope 123, switching between the SEM 116 and the interference microscope 123, and the like are done by the drive signal from the drive unit 117.

The drive unit 117 is electrically connected to the observation optical system 115, the SEM 116, the mounting stage mechanism 114, and the vacuum device 119, and can send the drive signal to drive them. The control unit 112 is connected to the drive unit 117.

The display unit 125 and an instruction unit 126 are connected to the control unit 112. The display unit 125 has the display screen 125a and is controlled by the control unit 112. An observation image acquired by the observation optical system 115 (interference microscope 123) and an observation image acquired by the SEM 116 are displayed on the display screen 125a as needed.

The instruction unit 126 is manipulated to operate the complex type observation device 110 as the measuring device, and a manipulation with the unit is read by the control unit 112. The instruction unit 126 is manipulated for various operations such as display and moving of a mark indicating a display area, switching between the interference microscope 123 and the SEM 116, and magnification adjustment of the interference microscope 123 and the SEM 116.

The control unit 112 collectively controls the display unit 125 and the device main body 111, and sends a control signal to the drive unit 117 to drive each unit of the device main body 111 as necessary. Further, the control unit 112 controls the display unit 125 to display an observation image acquired by the observation optical system 115 and an observation image acquired by the SEM 116 on the display screen 125a as well as to display marks indicating display areas on the display screen 125a displaying the observation images. The marks indicating the display areas include a measurement display frame, an electronic display frame, and an electronic display point. The measurement display frame designates a display area size obtained at the resolution of the interference microscope 123 of the observation optical system 115 on the display screen 125a, that is, a measurement display area for displaying an observation image (measurement observation image) acquired by the interference microscope 123 on the display screen 125a at a time. Further, the electronic display frame designates a display area size obtained at the resolution of the SEM 116 on the measurement observation image acquired by the interference microscope 123 of the observation optical system 115 and displayed on the display screen 125a, that is, an electronic display area for displaying an observation image (electronic observation image 132) acquired by the SEM 116 on the display screen 125a at a time.

Further, the control unit 112 includes a storage unit 127. Under the control of the control unit 112, the storage unit 127 can store observation images (optical observation image, measurement observation image, and electronic observation image) (image data as observation images) displayed on the display screen 125a as well as positional information between observation images. The storage into the storage unit 127 may be performed in response to a manipulation with the instruction unit 126, or all the images displayed on the display screen 125a may be stored therein.

Further, when an observation image is displayed on the display screen 125a and another observation image associated with the observation image is stored in the storage unit 127, the control unit 112 enables the display unit 125 to display a measurement display frame (hereinafter referred to as a known measurement frame), an electronic display frame (hereinafter referred to as a known electronic frame), and an electronic display point (hereinafter referred to as a known electronic point) corresponding to the position of the stored observation image.

In this embodiment, the known measurement frame, the known electronic frame, and the known electronic point are the same as the measurement display frame, the electronic display frame, and the electronic display point to be displayed to acquire observation images, respectively. Therefore, preferably, the measurement display frame, the electronic display frame, and the electronic display point, and the known measurement frame, the known electronic frame, and the known electronic point are displayed, e.g., in different colors so that they can be visually distinctive.

In this embodiment, the control unit 112 is composed of a computer in which software (program) for controlling the device main body 111 of the complex type observation device 110 is installed, the display unit 125 is composed of a monitor, and the instruction unit 126 is composed of a mouse (keyboard) connected to the computer.

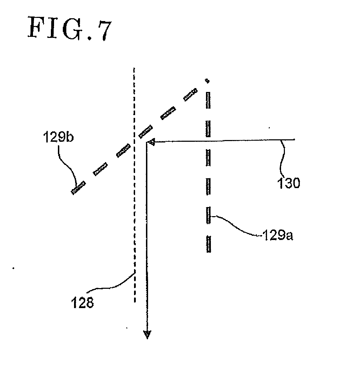

Although the interference microscope 123 is provided to the specimen chamber 113 of the electron microscope 116 in the embodiment of FIGS. 4 and 5, the interference microscope 123 can also be provided to an optical tube such as a spectrometer in place of the electron microscope 116 as shown in FIG. 6. In this case, a reflecting mirror 129 is provided to apply LED or LD laser light from the interference microscope 123 to the specimen along the same axis as an electron beam 128 as shown in FIG. 7. In the case of using the spectrometer, the reflecting mirror 129 can be rotated so as to deviate from the electron beam axis.

In FIG. 7, reference numeral 129a denotes a position of the reflecting mirror 129 at the time of using the spectrometer 116 disposed in place of the electron microscope 116, and reference numeral 129b denotes a position of the reflecting mirror 129 at the time of using the interference microscope 123. In the case of using the spectrometer 116, the reflecting mirror 129 is rotated from the position 129b to the position 129a so as to deviate from the axis of the electron beam 128.

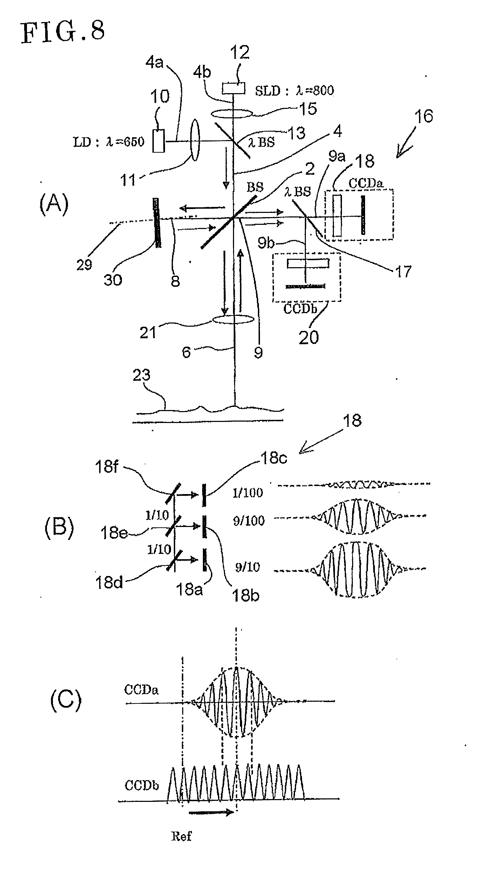

FIG. 8 shows an outline of a measuring device according to another preferred embodiment of the present invention. The embodiment of FIG. 8 is a partial modification of the embodiments of FIGS. 1 to 7. The same members or parts are denoted by the same reference numerals.

In the embodiment of FIG. 8, as shown in FIG. 8A, any two light sources of the laser diode (LD) or the luminescent diode (LD) 10 and the super luminescent diode (SLD) 12 are provided on the incident side, as sources of laser light of two wavelengths, particularly as low-coherence sources. Preferably, a light-emitting diode (LED) having a wavelength λ of 650 nm, a super luminescent diode (SLD) having a wavelength λ of 800 nm, a laser diode (LD) having wavelengths λ of about 800-900 nm, or the like is used.

The detection optical path 9 is branched at an incident beam splitter 17 into two branch optical paths 9a and 9b. A CCDa 18 of the detection means 16 is disposed in the branch optical path 9a, and a CCDb 20 of the detection means 16 is disposed in the branch optical path 9b.

The detection means 16 is composed of the CCDa 18 for detecting a focused wave (waveform) and the CCDb 20 for detecting a standing wave (waveform). The CCDa 18 has a plurality of detectors which detect a plurality of focused waves (waveforms) having different frequencies in accordance with optical intensity.

FIG. 8B shows an example of three detectors 18a, 18b, and 18c. In FIG. 8B, the three detectors 18a, 18b, and 18c are disposed from bottom to top. Three half mirrors 18d, 18e, and 18f corresponding thereto are provided, and focused waves (9/10, 9/100, 1/100) are detected respectively as shown at the right.

As shown in FIG. 8C, to obtain the maximum value (peak) of a waveform (focused wave), preferably the waveform (focused wave) acquired by the CCDa 18 is multiplied by the standing wave of the CCDb 20, thereby emphasizing the maximum value (peak) of the waveform (focused wave) to facilitate detection.

Preferably, calibration is performed with one bit (e.g., 256) of the CCDb 20 as a scale reference. For example, fragmentation by 1/256 is performed, and multiplication by one bit (e.g., 256) is performed.

The present invention is not limited to the above-described embodiments. For example, in the embodiments, the interference microscope is provided in the observation optical system; however, the present invention is not limited thereto. For example, the optical microscope can be disposed together with the interference microscope. The glass plate 73 used in the embodiment of FIG. 3 can be omitted.

Further, reference numeral 130 denotes LED or LD laser light.

**Claims**

1. An interference microscope for observing and detecting fine irregularities in a specimen surface and internal height information, using a two-beam interferometer for irradiating a specimen and a reference mirror with two beams into which a light beam having a limited coherence length is split, the interference microscope comprising:

    first means for shaping light beams from two light sources of different wavelengths and coherence lengths into a linear light beam on a same axis and emitting the linear light beam;
    second means for splitting a combined two-light-source beam;
    a reference optical path for conducting and applying the two-light-source beam to the reference mirror via the second means and forming an image only in a line direction;
    condensing means for forming and applying a two-light-source beam image to the specimen;
    a measurement optical path for condensing finely-reflected-and-scattered light from the specimen into a light beam and conducting the light beam; and
    a detection optical path for receiving, by same detection means, reflected light from the reference optical path and measurement light from the measurement optical path;
    wherein by providing an optical path difference obtained by slight tilt to the reference optical path, interference fringe distribution having height distribution information in a line direction of the specimen surface is formed at a position where light beams from the reference mirror and the specimen overlap each other, and the height distribution information is obtained without moving a relative distance between the specimen and the reference mirror or moving interference fringes by wavelength scanning.

2. The interference microscope according to claim 1, wherein the linear light beam is emitted by an element that emits light in line form.

3. The interference microscope according to claim 1, wherein the linear light beam is emitted by an element that emits light in plane form.

4. The interference microscope according to claim 1, wherein the linear light beam is obtained by linearly arranging point light sources.

5. The interference microscope according to claim 1, wherein the linear light beam is a light beam shaped elliptically or linearly from point light sources via an asymmetric optical system.

6. The interference microscope according to claim 1, wherein the linear light beam is a linear pattern formed by consecutively arranging point light sources or line light sources, using a diffraction optical element or a multireflection plate.

7. The interference microscope according to any one of claims 1 to 6, wherein the reference optical path and the measurement optical path are composed of different optical systems and have means for correcting a field angle deviation with respect to the measurement optical path and an optical path length difference by wavelength dispersion.

8. The interference microscope according to any one of claims 1 to 7, wherein at least one or both of the reference optical path and the measurement optical path is an optical waveguide device such as a fiber.

9. The interference microscope according to any one of claims 1 to 8, wherein the wavelengths of the two light sources lie in bands usable by a same optical system and detection means.

10. The interference microscope according to any one of claims 1 to 9, wherein a laser diode (LD), a light-emitting diode (LED), or a super luminescent diode (SLD) are provided as the light sources.

11. The interference microscope according to any one of claims 1 to 9, wherein a laser diode (LD) is used so as to emit light like a light-emitting diode (LED) or a super luminescent diode (SLD).

12. The interference microscope according to any one of claims 1 to 11, wherein at least one of the two light sources is a laser light source which oscillates at a single wavelength.

13. The interference microscope according to any one of claims 1 to 12, wherein at least one of the two light sources is a light source that has a switching function in a drive unit and can be used as a laser light source which oscillates at a single wavelength and a low-coherence source of a wide wavelength width.

14. The interference microscope according to any one of claims 1 to 13, wherein the two light sources emit light simultaneously.

15. The interference microscope according to any one of claims 1 to 14, wherein the two light sources have a switching function, and can be alternately turned on and off.

16. The interference microscope according to any one of claims 1 to 15, wherein the reference mirror is tilted in a fixed manner.

17. The interference microscope according to any one of claims 1 to 16, wherein the reference mirror is tilted in a tiltable manner.

18. The interference microscope according to any one of claims 1 to 14, wherein a stepwise mirror having a given step is used as the reference mirror.

19. The interference microscope according to any one of claims 1 to 18, wherein a Michelson interferometer or a Linnik interferometer is used as the interferometer.

20. The interference microscope according to any one of claims 1 to 19, wherein the interference microscope has measurement optical path beam scanning means or specimen stage moving means and enables sequential line irradiation in a one-dimensional direction of the specimen.

21. The interference microscope according to any one of claims 1 to 20, wherein a line sensor or an area sensor is used as the detection means, and in order that light beams from the reference mirror and the specimen efficiently overlap each other in the sensor, light is condensed by a cylindrical lens and a distance between the detection means and splitting means is minimized as much as possible.

22. The interference microscope according to any one of claims 1 to 20, wherein in order to insert an optical element having a minimum function in the reference optical path, a cylinder lens having the same focal distance as an objective lens is used, and a flat glass substrate having the same effect as the dispersion value of the objective lens is inserted.

23. The interference microscope according to any one of claims 1 to 22, wherein the interference microscope has observation means in which illumination and imaging optical systems for displaying a two-dimensional image of the specimen are included and condensing means in the measurement optical path is shared as part of the optical systems, and enables height detection and specimen image observation to be performed simultaneously or separately by switching between respective light sources.

24. The interference microscope according to any one of claims 1 to 23, wherein an illumination light source of the observation means is a light source having a wavelength range different from that of a light source for height measurement.

25. A measuring device provided with an interference microscope for observing and detecting fine irregularities in a specimen surface and internal height information, using a two-beam interferometer for irradiating a specimen and a reference mirror with two beams into which a light beam having a limited coherence length and shaped from point light sources is split, the measuring device comprising:

a reference optical path for conducting and applying a light beam to the reference mirror;
condensing means for condensing a light beam into a point beam and applying the point beam to the specimen; and
a measurement optical path for condensing finely-reflected-and-scattered light from the specimen into a light beam and conducting the light beam;
wherein by providing an optical path difference obtained by slight tilt to the reference optical path, interference fringes having height information is formed at a position where light beams from the reference mirror and the specimen overlap each other, and the height information can be obtained without vertically moving the specimen or moving the interference fringes.

# FIG.1

# FIG.2

(a)

x: DC COMPONENT

(b)

(c)

## FIG.3

## FIG.4

EP 2 463 616 A1

FIG.5

FIG.6

15

FIG.7

129b

130

128

129a

FIG.8

(A)

12
4a
4b
SLD : λ≈800
10
15
16
LD : λ≈650
13
λ BS
4
11
2
9a
18
BS
λ BS
CCDa
29
17
30
8
9b
CCDb
21
20
6
9
23

(B)

18
18c
18f
1/100
18e
1/10
9/100
1/10
18d
18a
18b
9/10

(C)

CCDa

CCDb

Ref

| | INTERNATIONAL SEARCH REPORT | International application No. |
|---|---|---|
| | | PCT/JP2009/066318 |

**A. CLASSIFICATION OF SUBJECT MATTER**
*G01B9/02*(2006.01)i, *G01B11/24*(2006.01)i, *G01N21/956*(2006.01)i

According to International Patent Classification (IPC) or to both national classification and IPC

**B. FIELDS SEARCHED**

Minimum documentation searched (classification system followed by classification symbols)
G01B9/02, G01B11/24, G01N21/956

Documentation searched other than minimum documentation to the extent that such documents are included in the fields searched
Jitsuyo Shinan Koho          1922–1996    Jitsuyo Shinan Toroku Koho    1996–2009
Kokai Jitsuyo Shinan Koho    1971–2009    Toroku Jitsuyo Shinan Koho    1994–2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | Microfilm of the specification and drawings annexed to the request of Japanese Utility Model Application No. 181234/1983(Laid-open No. 88210/1985)<br>(Yokogawa Hokushin Electric Corp.),<br>17 June 1985 (17.06.1985),<br>page 7, line 8 to page 8, line 12; fig. 3<br>(Family: none) | 25<br>1-21,23,24<br>22 |
| X<br>Y<br>A | JP 2005-535882 A  (Angstro Vision, Inc.),<br>24 November 2005 (24.11.2005),<br>paragraphs [0053] to [0057], [0089]; fig. 10a<br>& US 2004/0027581 A1    & WO 2004/015367 A1 | 25<br>1-21,23,24<br>22 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 November, 2009 (17.11.09) | 24 November, 2009 (24.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

INTERNATIONAL SEARCH REPORT

International application No.

PCT/JP2009/066318

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2007-536539 A　(Carl Mahr Holding GmbH),<br>13 December 2007 (13.12.2007),<br>paragraphs [0007] to [0009], [0018] to [0023];<br>fig. 1<br>& US 2007/35744 A1　　　& WO 2005/108915 A1 | 1-21,23,24 |
| Y | JP 2005-274550 A　(Ricoh Co., Ltd.),<br>06 October 2005 (06.10.2005),<br>paragraphs [0052] to [0060]; fig. 1 to 4<br>(Family: none) | 1-21,23,24 |
| Y | JP 1-304303 A　(Yokogawa Electric Corp.),<br>07 December 1989 (07.12.1989),<br>page 2, lower right column, line 18 to page 4,<br>lower left column, line 10; fig. 1, 2<br>(Family: none) | 18 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006116028 A
- JP 2005530147 A
- JP 2006300792 A
- JP 11083457 A

### Non-patent literature cited in the description

- **Shuichi Makita ; Yoshiaki Yasuno ; Takashi Endo ; Masahide Itoh ; Toyohiko Yatagai.** phase shift spectral interference optical coherence tomography by reference wavefront tilting. *proceedings of the 64th academic lecture of the Japan Society of Applied Physics,* 2003
- **Yoshiaki Yasuno ; Shuichi Makita ; Takashi Endo ; Gouki Aoki ; Hiroshi Sumimura ; Masahide Itoh ; Toyohiko Yatagai.** One-shot-phase-shifting Fourier domain optical coherence tomography by reference wavefront tilting. Optical Society of America, 2004